# EUROPEAN PATENT SPECIFICATION

(11) **EP 3 716 593 B1**
(45) Date of publication and mention of the grant of the patent: **16.11.2022**
(21) Application number: 19748205.2
(22) Date of filing: 02.01.2019
(51) Int. Cl.: H04L 12/28, H04M 1/72415

(54) **USER TERMINAL APPARATUS AND CONTROL METHOD FOR CONTROLLING SAME**
BENUTZERENDGERÄTEVORRICHTUNG UND VERFAHREN ZUR STEUERUNG ZUR STEUERUNG DAVON
DISPOSITIF TERMINAL D'UTILISATEUR ET SON PROCÉDÉ DE COMMANDE

(30) Priority: 02.02.2018 KR 20180013503
(43) Date of publication of application: 30.09.2020
(73) Proprietor: Samsung Electronics Co., Ltd., Gyeonggi-do 16677 (KR)
(72) Inventor: PARK, Hyungryoung, Suwon-si Gyeonggi-do 16677 (KR); GO, Jeahwan, Suwon-si Gyeonggi-do 16677 (KR)
(74) Representative: Taor, Simon Edward William
(86) International application number: PCT/KR2019/000032
(87) International publication number: WO 2019/151661

(56) References cited:
- EP-A1- 3 355 172
- EP-A2- 1 580 928
- WO-A1-2017/052168
- WO-A1-2017/171204
- KR-A- 20120 072 518
- KR-A- 20130 005 890
- KR-A- 20150 051 514
- KR-A- 20150 092 873

## Description

### [Background Art]

### [Technical Field]

The disclosure relates to a user terminal apparatus and a control method for the same, and more particularly, to a user terminal apparatus that controls home appliances interlocked with one another, and a control method for the same.

### [Description of the Related Art]

In the past, in the case of an apparatus used by interlocking a plurality of apparatuses with one another, even when the apparatuses were interlocked, the individual apparatuses had to be separately controlled on a smartphone screen.

That is, in case a plurality of apparatuses were interlocked with one another, the plurality of interlocked apparatuses had to be controlled by a single apparatus, but on a smartphone, the apparatuses were recognized as individual apparatuses and screens for controlling the individual apparatuses were respectively constituted, and thus there was inconvenience for a user of having to input a user instruction separately into each apparatus.

EP1580928 discloses an information processing system and method, in which logical connection information about all of the slave apparatuses is gathered from the respective slave apparatuses to the master apparatus for intensive management, and transmitted from the master apparatus to at least one of the input/output terminal and the slave apparatus. At the input/output terminal, a logical connection status is displayed on the basis of the logical connection information.

### [Detailed Description of the Invention]

### [Technical Problem]

The disclosure was devised according to the aforementioned need, and the purpose of the disclosure is in providing a user terminal apparatus that integrally controls interlocked home appliances, and a control method for the same.

### [Technical Solution]

According to an aspect, there is provided a user terminal device as set out in claim 1. Optional features of this aspect are set out in claims 2 to 8. According to another aspect, there is provided a system as set out in claim 9. According to another aspect, there is provided a control method as set out claim 10. Optional features of this aspect are set out in claims 11 to 13. [Effect of the Invention]

According to the various embodiments of the disclosure as described above, a plurality of interlocked home appliances can be integrally controlled like one apparatus, and thus user convenience is improved.

### [Brief Description of Drawings]

FIG. 1 is a schematic diagram for illustrating an electronic system wherein interlocked home appliances are controlled by a user terminal apparatus according to an embodiment of the disclosure;
FIG. 2 is a block diagram illustrating a configuration of a home appliance according to an embodiment of the disclosure;
FIG. 3 is a diagram for illustrating a UI controlling first and second home appliances of the same type according to an embodiment of the disclosure;
FIG. 4 is a diagram for illustrating a UI controlling first and second home appliances of different types according to an embodiment of the disclosure;
FIG. 5 is a diagram for illustrating a UI controlling first and second home appliances that are not attached to each other according to an embodiment of the disclosure;
FIG. 6 is a sequence diagram for illustrating operations among a user terminal apparatus, a server, and first and second home appliances according to an embodiment of the disclosure;
FIG. 7 is a diagram for illustrating an operation of indicating that first and second home appliances are in an interlocked state on a display according to an embodiment of the disclosure;
FIG. 8 is a diagram illustrating an example of a detailed configuration of the user terminal apparatus in FIG. 2; and
FIG. 9 is a flow chart for illustrating a control method of a user terminal apparatus according to an embodiment of the disclosure.

### [Best Mode for Implementing the Invention]

-

### [Mode for Implementing the Invention]

Hereinafter, the disclosure will be described in detail with reference to the drawings. In addition, the embodiments below may be modified in various different forms as long as the resulting subject-matter still falls under the scope of the appended claims, and the scope of the technical idea of the disclosure is not limited to the embodiments below. Rather, these embodiments are provided to make the disclosure more sufficient and complete, and to fully convey the technical idea of the disclosure to those skilled in the art.

Also, the description that a part 'includes' an element means that another element may be further included, but not that another element is excluded, unless there is a particular opposing description. Further, various elements and areas in drawings were illustrated schematically. Accordingly, the technical idea of the disclosure is not limited by the relative sizes or intervals illustrated in the accompanying drawings.

In addition, the expression 'at least one of a, b, or c' may be interpreted as 'a,' 'b', 'c,' 'a and b,' 'a and c,' 'b and c,' or 'a, b, and c.'

Hereinafter, the disclosure will be described in detail with reference to the accompanying drawings.

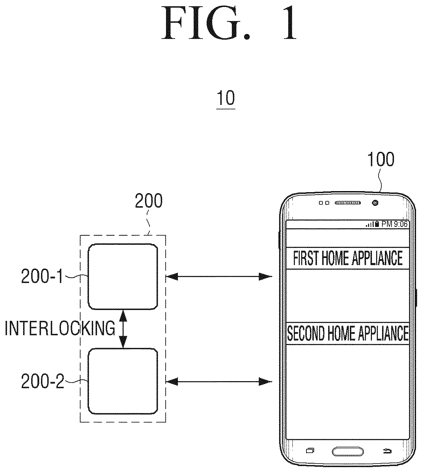

FIG. 1 is a schematic diagram for illustrating an electronic system wherein interlocked home appliances are controlled by a user terminal apparatus according to an embodiment of the disclosure.

According to FIG. 1, the electronic system 10 includes a user terminal apparatus 100, and first and second home appliances 200.

The user terminal apparatus 100 performs communication with the first and second home appliances 200 directly or performs communication with the first and second home appliances 200 through a server (not shown). That is, if a user instruction is input, the user terminal apparatus 100 may directly transmit the input instruction to the first and second home appliances 200 or transmit the input instruction to the first and second home appliances 200 through a server. Here, a server may be a cloud server wherein information on the first and second home appliances 200 is stored.

The user terminal apparatus 100 may be implemented as a mobile phone like a smartphone that is capable of communicating with the first and second home appliances 200 or the server, but is not limited thereto, and it may be implemented as a tablet, a laptop computer, a PC, a remote control, etc.

Each of the first and second home appliances 200 may be a module type apparatus that can be detached from or attached to each other, and is interlocked with each other in case it is attached. Each home appliance 200-1, 200-2 may independently perform the functions of a home appliance, and in case the first and second home appliances 200 are interlocked, they may integrally perform the functions of a home appliance like one apparatus. That is, in case the first and second home appliances 200 are interlocked and integrally controlled, if a user instruction is input, the interlocked first and second home appliances 200 may perform an operation corresponding to the user instruction together.

Here, interlocking may not only be a state wherein the first and second home appliances 200-1, 200-2 physically contact each other and are communicatively connected or are arranged to be adjacent to each other and are communicatively connected but also a state wherein the first and second home appliances 200-1, 200-2 are communicatively connected with each other even though they are not arranged to be adjacent and are integrally controlled from the user terminal apparatus 100.

The first and second home appliances 200-1, 200-2 are module type apparatuses and may be implemented as an air purifier, a humidifier, a speaker, etc. However, the first and second home appliances 200-1, 200-2 are not limited thereto as long as they are apparatuses that are communicatively connected with each other and are integrally controlled, even though they cannot be detached from or attached to each other. For example, the first and second home appliances 200-1, 200-2 may be implemented as home appliances in various forms such as an air conditioner, a robot cleaner, etc.

As an example, if the second home appliance 200-2 which is an air purifier is arranged on the top portion of the first home appliance 200-1 which is an air purifier and is interlocked with the first home appliance 200-1, the first and second home appliances 200-1, 200-2 may be integrally controlled. Alternatively, if the first home appliance 200-1 which is a stand type air conditioner located in a living room and the second home appliance 200-2 which is a wall mounted air conditioner located in a room are interlocked, the first and second home appliances 200-1, 200-2 may be integrally controlled.

According to an embodiment of the disclosure, in case the first and second home appliances 200 are interlocked, one of the first and second home appliances 200 may be a master device and the other may be a slave device controlled by the master device, and the first and second home appliances 200 may be integrally controlled. The user terminal apparatus 100 just needs to control the master device for integrally controlling the first and second home appliances 200. Hereinafter, various embodiments of the disclosure will be described in detail with reference to the drawings.

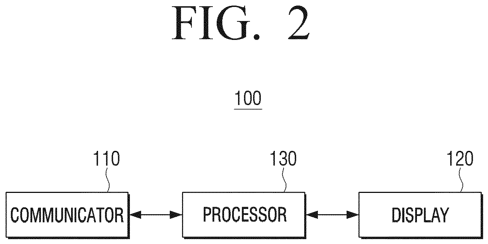

FIG. 2 is a block diagram illustrating a configuration of a home appliance according to an embodiment of the disclosure.

According to FIG. 2, the user terminal apparatus 100 includes a communicator 110, a display 120, and a processor 130.

The communicator 110 performs communication with the first and second home appliances 200. Alternatively, the communicator 110 may perform communication with an external server (not shown).

Here, the communicator 110 may perform wireless communication with the first and second home appliances 200 or an external server by communication methods such as BlueTooth (BT), Wireless Fidelity (WI-FI), Zigbee, Infrared (IR), etc. Also, the communicator 110 may perform communication with the first and second home appliances 200 or an external server through various communication methods such as Serial Interface, Universal Serial Bus (USB), Near Field Communication (NFC), etc.

For example, if a predetermined event occurs, the communicator 110 may perform communication with the first and second home appliances 200 according to a predetermined communication method, and become a connected state. Here, connection may mean all states wherein communication becomes possible such as an operation that communication is initialized between the user terminal apparatus 100 and the first and second home appliances 200, an operation that a network is formed, an operation that device paring is performed, etc. For example, identification information of each of the first and second home appliances 200 may be provided to the user terminal apparatus 100, and in accordance thereto, a paring procedure between the two apparatuses may be performed. For example, if a predetermined event occurs at the user terminal apparatus 100 or the first and second home appliances 200, an adjacent apparatus is searched through a Digital Living Network Alliance (DLNA) technology and paring with the searched apparatus is performed, and the apparatuses may become a connected state.

Here, identification information may include the IP addresses, MAC addresses, product names, and product numbers of each of the first and second home appliances 200, and type information indicating the types of each of the first and second home appliances 200, etc.

The display 120 provides an item for controlling the first and second home appliances 200 according to control of the processor 130. Also, if an item for controlling the master device between the first and second home appliances 200 is selected, the display 120 provides a UI for integrally controlling the first and second home appliances 200 according to control of the processor 130.

Here, an item may be an icon displayed to display a UI for controlling each of the first home appliance 200-1 and the second home appliance 200-2. For example, if a first item corresponding to the first home appliance 200-1 is selected, a UI for controlling the first home appliance 200-1 is displayed, and if a second item corresponding to the second home appliance 200-2 is selected, a UI for controlling the second home appliance 200-2 may be displayed.

The display 120 may be implemented as various forms such as a liquid crystal display (LCD), organic light-emitting diodes (OLEDs), Liquid Crystal on Silicon (LCoS), Digital Light Processing (DLP), a quantum dot (QD) display panel, etc.

The processor 130 controls the overall operations of the user terminal apparatus 100.

According to an embodiment of the disclosure, the processor 130 may be implemented as a digital signal processor (DSP) processing digital signals, a microprocessor, and a time controller (TCON). However, the disclosure is not limited thereto, and the processor 130 may include one or more of a central processing unit (CPU), a micro controller unit (MCU), a micro processing unit (MPU), a controller, an application processor (AP) or a communication processor (CP), and an ARM processor, or may be defined by the terms. Also, the processor 130 may be implemented as a System on Chip (SoC) having a processing algorithm stored therein or large scale integration (LSI), or in the form of a field programmable gate array (FPGA).

When the user terminal apparatus 100 is communicatively connected with the first and second home appliances 200, the processor 130 recognizes the first and second home appliances 200 as controllable apparatuses and register them in the user terminal apparatus 100. According to an embodiment of the disclosure, the processor 130 may store identification information of the first and second home appliances 200 in a storage part (not shown), and when a user instruction for controlling at least one of the first and second home appliances 200 is input, the processor 130 may transmit a control signal for controlling at least one of the first and second home appliances 200 to at least one of the first and second home appliances 200 based on the stored identification information. Meanwhile, in case the first and second home appliances 200 are in a state of being interlocked with each other, a signal corresponding to the user instruction is transmitted only to the master device between the first and second home appliances 200. Hereinafter, an operation for the user terminal apparatus 100 to integrally control the first and second home appliances 200 in case the first and second home appliances 200 are in an interlocked state will be described in detail.

According to the claimed invention, the processor 130 provides first and second items for respectively controlling the first and second home appliances 200 on the display 120.

Here, the first and second items may be icons displayed to display a UI for respectively controlling the first home appliance 200-1 and the second home appliance 200-2. For example, if the first item corresponding to the first home appliance 200-1 is selected, the processor 130 may display a UI for controlling the first home appliance 200-1, and if the second item corresponding to the second home appliance 200-2 is selected, the processor 130 may display a UI for controlling the second home appliance 200-2.

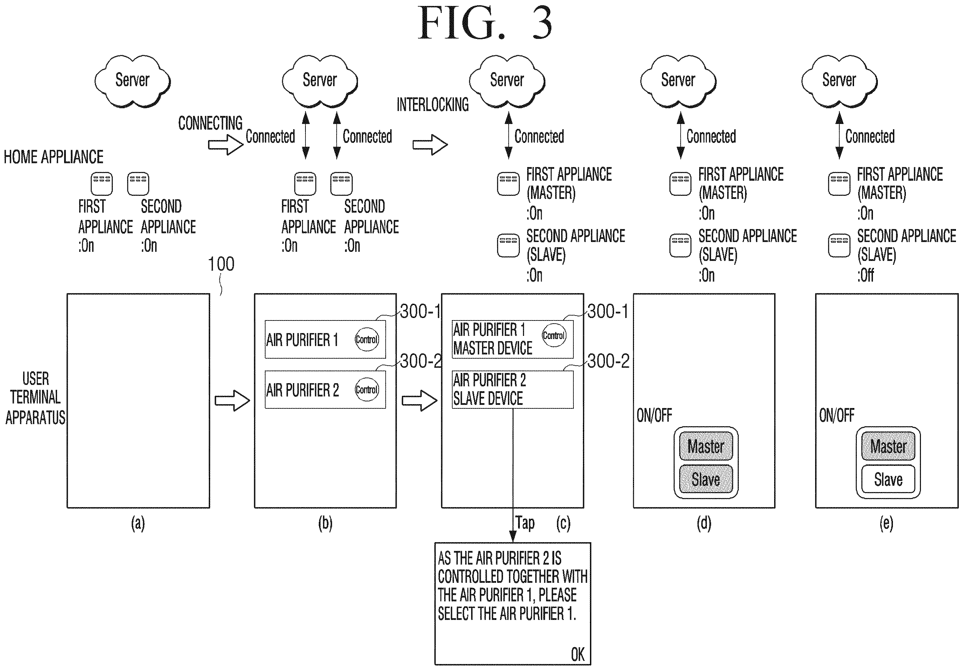

In the items, identification information including type information of each home appliance, etc. may be included. For example, the first item for controlling an air purifier corresponding to the first home appliance 200-1 and the second item for controlling a robot cleaner corresponding to the second home appliance 200-2 may be displayed on the display 120. Also, on the first item, "air purifier" may be displayed, and on the second item, "robot cleaner" may be displayed. Explanation in this regard will be made with reference to FIG. 3.

The processor 130 receives state information wherein the first home appliance 200-1 is configured as a master device and the second home appliance 200-2 is configured as a slave device through the communicator 110.

Here, the master device is a device that can control the slave device. That is, the user terminal apparatus 100 may control only the master device, and the slave device may be controlled by the master device.

State information is information wherein it is identified which device between the first and second home appliances is the master device and which device is the slave device. State information may be received from at least one of the first and second home appliances 200.

Meanwhile, the first home appliance 200-1 may be configured as the master device based on at least one of the arrangement state of the first and second home appliances 200 and a user instruction. For example, in case a device in the upper part among a plurality of home appliances is configured as the master device, if the plurality of home appliances are attached to each other, the device located in the upper part may be the first home appliance 200-1 which is the master device. Alternatively, in case the first and second home appliances 200 are interlocked, the first home appliance 200-1 may be the master device by selection of a user. As an example, when the first and second home appliances 200 registered in the user terminal apparatus 100 are interlocked, a UI requesting selection of one of the first and second home appliances 200 as the master device may be provided on the display 120. Afterwards, the device which a user selected as the master device may be the first home appliance 200-1.

According to the claimed invention, when state information wherein the first home appliance 200-1 is configured as the master device and the second home appliance 200-2 is configured as the slave device is received, the processor 130 may change the display state of the second item. Also, if the first item is selected, the processor 130 provides a UI for integrally controlling the first and second home appliances 200 on the display 120.

When the state information is received, the processor 130 may change the second item into an inactivated state. That is, when the state information is received, the processor 130 may change the display state of the second item into an inactivated state.

As the second item for controlling the slave device is inactivated, it may be indirectly notified to a user that the slave device is integrally controlled by the master device.

Here, the inactivated state may be a state wherein the second item for controlling the slave device went through dim processing or is concealed.

If the second item is selected, the processor 130 may provide information notifying that the second home appliance 200-2 is integrally controlled on a UI for controlling the master device.

That is, in case the inactivated second item is selected as the state information is received, the processor 130 may provide information notifying that the second home appliance 200-2 which is the slave device is controlled on a UI for controlling the master device. For example, in case the inactivated second item for controlling a BBB device which is the slave device is selected, the processor 130 may provide text information like "As the BBB device is controlled together with the AAA device, please select the AAA device" on the display 120. However, such a means for providing information is not limited to texts, but information notifying that the slave device is also controlled on a UI for controlling the master device may be provided by various means such as images, sounds, voices, LED outputs, etc. That is, the processor 130 may directly notify to a user that the slave device is integrally controlled by the master device.

When the state information is received, the processor 130 may provide information indicating whether the first and second home appliances 200 are the master device or the slave device through the display 120 based on the state information.

For example, the processor 130 may display information indicating that the first home appliance 200-1 is the master device on the first item for controlling the first home appliance 200-1, and display information indicating that the second home appliance 200-2 is the slave device on the second item for controlling the second home appliance 200-2 on the display 120. Alternatively, the processor 130 may display the colors of the first item and the second item differently, and thereby indicate that the first home appliance 200-1 is the master device, and the second home appliance 200-2 is the slave device.

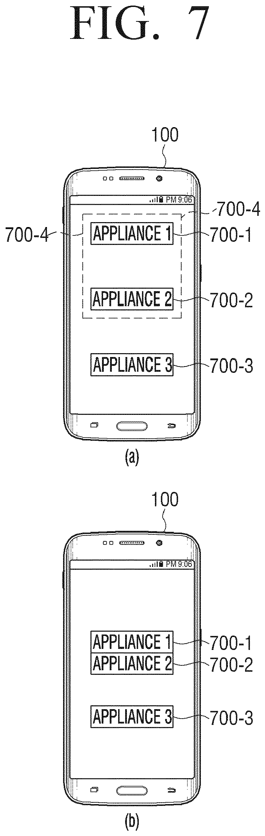

Also, in order to indicate that the first and second home appliances 200 are in an interlocked state, the processor 130 may display the first item for controlling the first home appliance 200-1 and the second item for controlling the second home appliance 200-2 in one diagram together, or arrange them to be relatively adjacent. Alternatively, the processor 130 may display the first and second items with the same color and thereby indicate that they are in an interlocked state. Detailed explanation in this regard will be made with reference to FIG. 7 below.

A UI for integrally controlling the first and second home appliances includes menus for controlling the first home appliance.

A UI for integrally controlling the first and second home appliances 200 is a screen displayed on the display 120 when the first item is selected, and includes menus for manipulating the detailed functions of the first home appliance 200-1. For example, in case the first home appliance 200-1 is an air conditioner, a UI for controlling the air conditioner may include menus for manipulating a power turning-on/turning-off function, a temperature adjusting function, a cooling function, an air blasting function, a dehumidifying function, etc.

According to an embodiment of the disclosure, in case the first and second home appliances 200 are the same type, most functions of the first and second home appliances 200 may be integrally controlled. In case the first and second home appliances 200 are of different types, the processor 130 may integrally control functions that are in common between the first and second home appliances 200. The processor 130 may separately display menus on a UI corresponding to the common functions between the first and second home appliances 200.

For example, in case both of the first and second home appliances 200 are air purifiers, most functions of the first and second home appliances 200 may be similar or identical. In this case, power turning-on/turning-off, strength of air purification, a driving mode, sleeping reservation, etc. which are the common functions of the first and second home appliances 200 may be integrally controlled. As an example, in case a user instruction for setting the strength of air purification as "strong" is input on a UI that can integrally control the first and second home appliances 200, the strength of air purification of the first and second home appliances 200 may be integrally controlled as "strong."

Meanwhile, in case the first home appliance 200-1 is an air purifier, and the second home appliance 200-2 is a robot cleaner, a UI for integrally controlling the first and second home appliances 200 may include power turning-on/turning-off, strength of air purification, a driving mode, a sleeping reservation menu, etc. which are the functions of an air purifier. The processor 130 may separately display menus corresponding to power turning-on/turning-off, sleeping reservation, etc. which are the common functions of the first and second home appliances 200. For example, the processor 130 may enlarge the sizes of the menus corresponding to power turning-on/turning-off, sleeping reservation, etc. displayed on the UI, or display the colors of the menus differently, or make the menus flicker. Accordingly, a user may conveniently recognize functions that are common functions of the first and second home appliances 200 and can be integrally controlled.

Meanwhile, the processor 130 may separately display a UI that can independently control each of the first and second home appliances 200 on a UI for integrally controlling the first and second home appliances 200. Specifically, a UI that can control the second home appliance 200-2 may be separately displayed. Accordingly, even if the first and second home appliances 200 are interlocked with each other, each of the first and second home appliances 200 may be independently controlled.

If a menu included in the UI for integrally controlling the first and second home appliances 200 is selected, the processor 130 transmits a control command for making a control operation corresponding to the menu performed at both of the first and second home appliances 200 to the first home appliance 200-1.

The processor 130 may transmit a control command to the first home appliance 200-1 based on identification information of the first home appliance 200-1 which is the master device. The first home appliance 200-1 may transmit a control signal corresponding to the input command to the second home appliance 200-2 which is the slave device and perform an operation corresponding to the input command together with the second home appliance 200-2. The second home appliance 200-2 may ignore the control signal transmitted from the user terminal apparatus 100 and perform only an operation corresponding to the control signal received from the first home appliance 200-1.

For example, it is assumed that the first and second home appliances 200 are air purifiers, and the first air purifier is the master device, and the second air purifier is the slave device. If a user instruction changing the strength of air purification of the first and second air purifiers to "strong" is input, the processor 130 may transmit a signal corresponding to the strength of air purification "strong" to the first air purifier based on identification information of the first air purifier. Afterwards, the first air purifier may transmit the signal corresponding to the strength of air purification "strong" to the second air purifier, and the strength of air purification of the first and second air purifiers may be changed to "strong" together.

If the first and second home appliances 200 are home appliances of different types, and a function corresponding to a menu is a common function of the first and second home appliances 200, the processor 130 may transmit a first control code and a second control code respectively corresponding to the types of the first and second home appliances 200 to the first home appliance 200-1.

For example, a case wherein the first home appliance 200-1 which is the master device is an air purifier and the second home appliance 200-2 which is the slave device is a humidifier will be assumed. As the humidifier is the slave device, it does not directly receive a control command from the user terminal apparatus 100, but may receive a control command from the air purifier which is the master device. In case a command to turn off the power after 30 minutes is input into the user terminal apparatus 100 with respect to a sleeping reservation function which is a common function of the air purifier and the humidifier, the processor 130 may transmit a first control code including a command to turn off the power after 30 minutes at the air purifier and a second control code including a command to turn off the power after 30 minutes at the humidifier to the air purifier. Afterwards, the air purifier may transmit the second control code to the humidifier, and the powers of the air purifier and the humidifier may be turned off together after 30 minutes.

If the first and second home appliances 200 are home appliances of different types, and a function corresponding to a menu is not a function provided at the second home appliance 200-2, the processor 130 may transmit a control code controlling to make the second home appliance 200-2 provide a function related to the function corresponding to the menu to the first home appliance 200-1.

For example, a case wherein the first home appliance 200-1 which is the master device is an air purifier and the second home appliance 200-2 which is the slave device is a humidifier will be assumed.

In case a command changing the strength of air purification to "strong" which is a function not provided at the humidifier which is the slave device is input into the user terminal apparatus 100, the processor 130 may transmit a control code changing the humidification strength of the humidifier to "strong" to the air purifier. It is obvious that the processor 130 transmits a control code changing the strength of air purification to "strong" to the air purifier. Afterwards, the air purifier may transmit the control code changing the humidification strength of the humidifier to "strong" to the humidifier, and the air purifier may be operated while the strength of air purification is changed to "strong" and the humidifier may be operated while the strength of humidification is changed to "strong."

A function of the second home appliance 200-2 which is similar to a function provided at the first home appliance 200-1 may be set in advance or set by a user. If a specific menu performed at the first home appliance 200-1 is selected, a user may set a macro such that a specific function is performed at the second home appliance 200-2. For example, in case the first home appliance 200-1 which is the master device is an air purifier and the second home appliance 200-2 which is the slave device is a robot cleaner, if a command changing the strength of air purification of the air purifier to "strong" is input, sleeping reservation that the power is turned off after 30 minutes may be set as a macro at the robot cleaner. If a user inputs a command changing the strength of air purification to "strong," the power of the robot cleaner may be turned off after 30 minutes.

According to another embodiment of the disclosure, state information may be received from an external server. That is, the processor 130 may perform communication with the first and second home appliances 200 through an external server. Specifically, the processor 130 may receive identification information of the first and second home appliances 200 from an external server, and if a user instruction for controlling the first and second home appliances 200 is input, the processor 130 may transmit the input instruction to the first home appliance 200-1 which is the master device through the external server.

Here, the external server may be a cloud server storing information on the first and second home appliances 200.

Hereinafter, for the convenience of explanation, it will be described that the user terminal apparatus 100 performs communication with the first and second home appliances 200 through an external server.

FIG. 3 is a diagram for illustrating a UI controlling the first and second home appliances of the same type according to an embodiment of the disclosure.

According to FIG. 3, it will be assumed that the first and second home appliances 200 are implemented as an air purifier 1 (the first device) and an air purifier 2 (the second device).

FIG. 3A is a diagram illustrating a state wherein the air purifier 1 and the air purifier 2 are not registered in the user terminal apparatus 100, and the air purifier 1 and the air purifier 2 are not interlocked with each other. Accordingly, on the display 120 of the user terminal apparatus 100, devices that can be controlled may not be displayed.

FIG. 3B is a diagram illustrating a state wherein each of the air purifier 1 and the air purifier 2 is connected with a server. As each of the air purifier 1 and the air purifier 2 is connected with a server, identification information of the air purifier 1 and the air purifier 2 may be stored in the server. The user terminal apparatus 100 may receive the identification information of the air purifier 1 and the air purifier 2 from the server, and display items for controlling each of the air purifier 1 and the air purifier 2 on the display 120. A first item 300-1 for controlling the air purifier 1 and a second item 300-2 for controlling the air purifier 2 may be displayed on the display 120. The user terminal apparatus 100 may display the mark "control" on each of the first item 300-1 and the second item 300-2 to indicate that the first item 300-1 and the second item 300-2 are in an activated state.

FIG. 3C is a diagram illustrating a state wherein the air purifier 1 and the air purifier 2 are attached and interlocked with each other. The air purifier 1 may be arranged on the top portion of the air purifier 2 and the air purifier 1 may be the master device. The user terminal apparatus 100 may receive state information including the information that the air purifier 1 is the master device, and the air purifier 2 is the slave device through a server. Afterwards, the user terminal apparatus 100 may change the second item 300-2 for controlling the air purifier 2 into an inactivated state. Here, an inactivated state may be a state wherein the item goes through dim processing or is concealed. That is, the user terminal apparatus 100 may perform dim processing on the second item 300-2, or conceal the second item 300-2 to indicate that the second item 300-2 is in an inactivated state.

In addition to changing the item into an inactivated state, the user terminal apparatus 100 may provide state information by displaying that the air purifier 1 is the master device with a text on the first item 300-1, displaying that the air purifier 2 is the slave device with a text on the second item 300-2, or as illustrated in FIG. 3C, removing the mark "control" displayed on the second item 300-2.

In case the second item 300-2 which is in an inactivated state for controlling the air purifier 2 which is the slave device is selected, the user terminal apparatus 100 may provide information notifying that the slave device is also controlled on a UI for controlling the master device. For example, if the second item 300-2 which is in an inactivated state is selected, the user terminal apparatus 100 may provide text information like "As the air purifier 2 is controlled together with the air purifier 1, please select the air purifier 1" on the display 120. However, such a means for providing information is not limited to texts, but information notifying that the slave device is also controlled on a UI for controlling the master device may be provided by various means such as images, sounds, voices, LED outputs, etc.

FIG. 3D is a diagram for illustrating an operation of displaying a UI for controlling the master device and the slave device in case the first item 300-1 is selected in FIG. 3C.

If the first item 300-1 for controlling the master device is selected, the user terminal apparatus 100 displays a UI that can control the air purifier which is the master device. As illustrated in FIG. 3D, the user terminal apparatus 100 provides a UI that can integrally control the power turning-on/turning-off of the air purifier 1 and the air purifier 2. Also, the user terminal apparatus 100 may display a UI that can integrally control not only the power turning-on/turning-off function of the air purifier 1 and the air purifier 2 but also the strength of air purification, a driving mode, sleeping reservation, etc. which are the common functions of the air purifier 1 and the air purifier 2.

Meanwhile, although the air purifier 1 and the air purifier 2 are interlocked with each other, the user terminal apparatus 100 may also provide a UI that can independently control the air purifier 1 and the air purifier 2 on a UI screen according to selection of the first item 300-1.

FIG. 3E is a diagram for illustrating a case wherein a command to turn off the power of the slave device is input in FIG. 3D.

If a command to turn off the power of the slave device is input on the power turning-on/turning-off UI screen in FIG. 3D, the user terminal apparatus 100 may transmit a control signal corresponding to power turning-off of the air purifier 2 to the air purifier 1 and the air purifier 1 may transmit the received control command to the air purifier 2. Accordingly, the power of the air purifier 2 may be turned off. In this way, the slave device may be independently controlled.

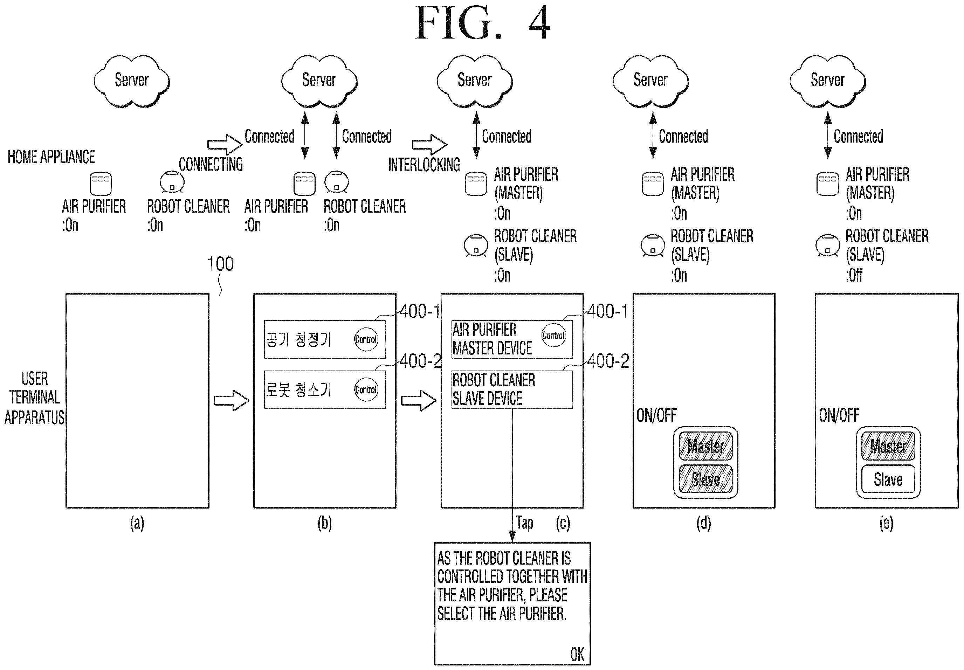

FIG. 4 is a diagram for illustrating a UI controlling the first and second home appliances of different types according to an embodiment of the disclosure.

According to FIG. 4, it will be assumed that the first and second home appliances 200 are implemented as an air purifier and a robot cleaner.

FIG. 4A is a diagram illustrating a state wherein the air purifier and the robot cleaner are not registered in the user terminal apparatus 100, and the air purifier and the robot cleaner are not interlocked with each other. Accordingly, devices that can be controlled may not be displayed on the display 120 of the user terminal apparatus 100.

FIG. 4B is a diagram illustrating a state wherein each of the air purifier and the robot cleaner is connected with a server. As each of the air purifier and the robot cleaner is connected with a server, identification information of the air purifier and the robot cleaner may be stored in the server. The user terminal apparatus 100 may receive the identification information of the air purifier and the robot cleaner from the server, and display items for controlling each of the air purifier and the robot cleaner on the display 120. A first item 400-1 for controlling the air purifier and a second item 400-2 for controlling the robot cleaner may be displayed on the display 120. The user terminal apparatus 100 may display the mark "control" on each of the first item 400-1 and the second item 400-2 to indicate that the first item 400-1 and the second item 400-2 are in an activated state.

FIG. 4C is a diagram illustrating a state wherein the air purifier and the robot cleaner are attached and interlocked with each other. The air purifier may be arranged on the top portion of the robot cleaner and the air purifier may be the master device. The user terminal apparatus may receive state information including the information that the air purifier is the master device, and the robot cleaner is the slave device through a server. Afterwards, the user terminal apparatus 100 may change the second item 400-2 for controlling the robot cleaner into an inactivated state. Here, an inactivated state may be a state wherein the item goes through dim processing or is concealed. That is, the user terminal apparatus 100 may perform dim processing on the second item 400-2, or conceal the second item 400-2 to indicate that the second item 400-2 is in an inactivated state.

In addition to changing the item into an inactivated state, the user terminal apparatus 100 may provide state information by displaying that the air purifier 1 is the master device with a text on the first item 400-1, displaying that the robot cleaner is the slave device with a text on the second item 400-2, or as illustrated in FIG. 4C, removing the mark "control" displayed on the second item 400-2.

In case the second item 400-2 which is in an inactivated state for controlling the robot cleaner which is the slave device is selected, the user terminal apparatus 100 may provide information notifying that the slave device is also controlled on a UI for controlling the master device. For example, if the second item 400-2 which is in an inactivated state is selected, the user terminal apparatus 100 may provide text information like "As the robot cleaner is controlled together with the air purifier, please select the air purifier" on the display 120. However, such a means for providing information is not limited to texts, but information notifying that the slave device is also controlled on a UI for controlling the master device may be provided by various means such as images, sounds, voices, LED outputs, etc.

FIG. 4D is a diagram for illustrating an operation of displaying a UI for controlling the master device and the slave device in case the first item 400-1 is selected in FIG. 4C.

If the first item 400-1 for controlling the master device is selected, the user terminal apparatus 100 may display a UI that can control the air purifier which is the master device. Alternatively, the user terminal apparatus 100 may display a menu manipulating a function that is in common between the air purifier and the robot cleaner. For example, as illustrated in FIG. 4D, the user terminal apparatus 100 may provide a UI that can integrally control the power turning-on/turning-off of the air purifier and the robot cleaner. Also, the user terminal apparatus 100 may display a UI that can integrally control not only the power turning-on/turning-off function of the air purifier and the robot cleaner but also sleeping reservation, etc. which are the common functions of the air purifier and robot cleaner.

Meanwhile, although the air purifier and the robot cleaner are interlocked with each other, the user terminal apparatus 100 may also provide a UI that can independently control the air purifier and the robot cleaner on a UI screen according to selection of the first item 400-1.

FIG. 4E is a diagram for illustrating a case wherein a command to turn off the power of the slave device is input in FIG. 4D.

If a command to turn off the power of the slave device is input on the power turning-on/turning-off UI screen in FIG. 4D, the user terminal apparatus 100 may transmit a control code corresponding to power turning-off of the robot cleaner to the air purifier and the air purifier may transmit the received control code to the robot cleaner. Accordingly, the power of the robot cleaner may be turned off.

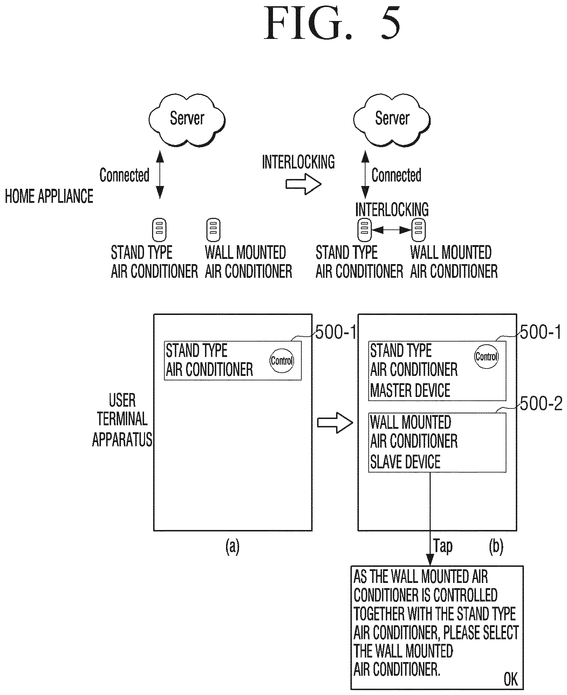

FIG. 5 is a diagram for illustrating a UI controlling the first and second home appliances that are not attached to each other according to an embodiment of the disclosure.

According to FIG. 5, it will be assumed that the first and second home appliances 200 are implemented as a stand type air conditioner and a wall mounted air conditioner.

FIG. 5A is a diagram illustrating a state wherein only the stand type air conditioner is connected with a server. As the stand type air conditioner is connected with a server, identification information of the stand type air conditioner may be stored in the server. The user terminal apparatus 100 may receive the identification information of the stand type air conditioner from the server, and display a first item 500-1 for controlling the stand type air conditioner on the display 120. The user terminal apparatus 100 may display the mark "control" on the first item 500-1 to indicate that the first item 500-1 is in an activated state.

FIG. 5B is a diagram illustrating a state wherein the stand type air conditioner and the wall mounted air conditioner are interlocked with each other without being attached to each other. The user terminal apparatus 100 may receive state information including the information that the stand type air conditioner is the master device, and the wall mounted air conditioner is the slave device through a server. Afterwards, the user terminal apparatus 100 may change the second item 500-2 for controlling the wall mounted air conditioner into an inactivated state.

In addition to changing the item into an inactivated state, the user terminal apparatus 100 may display that the stand type air conditioner is the master device with a text on the first item 500-1, display that the wall mounted air conditioner is the slave device with a text on the second item 500-2, or as illustrated in FIG. 5B, display the mark "control" only on the first item 500-1.

In case the second item 500-2 which is in an inactivated state for controlling the wall mounted air conditioner which is the slave device is selected, the user terminal apparatus 100 may provide information notifying that the slave device is also controlled on a UI for controlling the master device. For example, if the second item 500-2 which is in an inactivated state is selected, the user terminal apparatus 100 may provide text information like "As the wall mounted air conditioner is controlled together with the stand type air conditioner, please select the stand type air conditioner" on the display 120. However, such a means for providing information is not limited to texts, but information notifying that the slave device is also controlled on a UI for controlling the master device may be provided by various means such as images, sounds, voices, LED outputs, etc.

As the operations after the above operations are the same as those in FIG. 4D and FIG. 4E, they will be omitted.

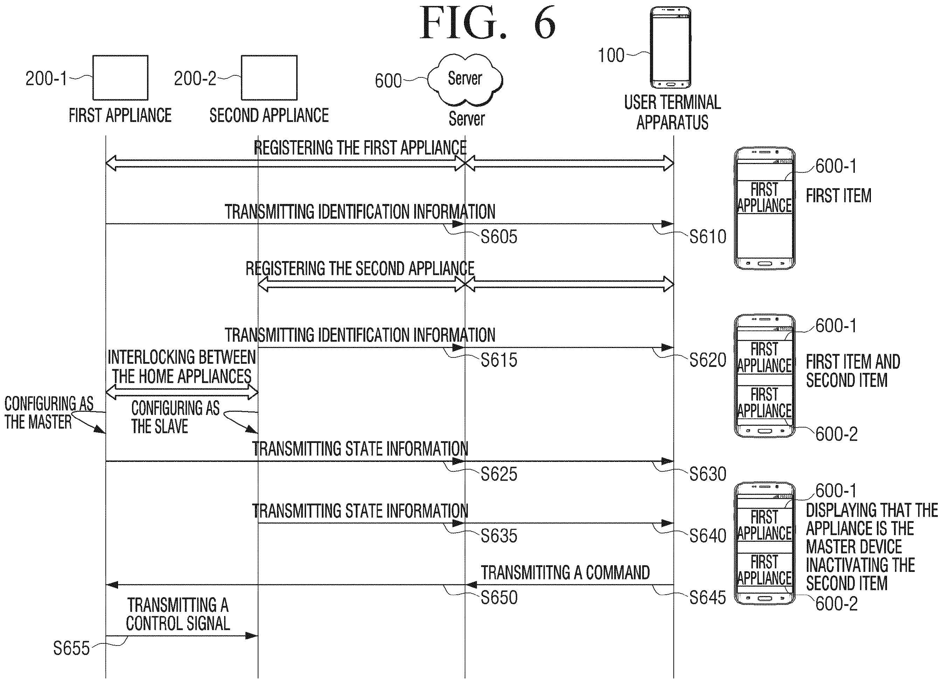

FIG. 6 is a sequence diagram for illustrating operations among a user terminal apparatus, a server, and first and second home appliances according to an embodiment of the disclosure.

The first home appliance 200-1 may transmit the identification information of the first home appliance 200-1 to the server 600 at operation S605. Here, the identification information may include the IP address, MAC address, product name, and product number, and type information indicating the type of the first home appliance 200-1, etc. When the identification information of the first home appliance 200-1 is received from the server 600 at operation S610, the user terminal apparatus 100 may register the first home appliance 200-1 in the user terminal apparatus 100. When the first home appliance 200-1 is registered, the user terminal apparatus 100 provides a first item 600-1 for controlling the first home appliance 200-1 on the display 120.

The second home appliance 200-2 may transmit the identification information of the second home appliance 200-2 to the server 600 at operation S615. When the identification information of the second home appliance 200-2 is received from the server 600 at operation S620, the user terminal apparatus 100 may register the second home appliance 200-2 in the user terminal apparatus 100. When the second home appliance 200-2 is registered, the user terminal apparatus 100 provides a second item 600-2 for controlling the second home appliance 200-2 on the display 120.

In case the first and second home appliances 200-1, 200-2 are interlocked with each other, one of the first and second home appliances 200-1, 200-2 may be the master device, and the other may be the slave device based on at least one of the arrangement state of the first and second home appliances 200-1, 200-2 and selection of a user.

The first home appliance 200-1 may transmit state information that the first home appliance 200-1 is the master device to the server 600 at operation S625. When state information that the first home appliance 200-1 is the master device is received from the server at operation S630, the user terminal apparatus 100 may display information indicating that the first home appliance 200-1 is the master device on the first item 600-1.

The second home appliance 200-2 may transmit state information that the second home appliance 200-2 is the slave device to the server 600 at operation S635. When state information that the second home appliance 200-2 is the slave device is received from the server at operation S640, the user terminal apparatus 100 may change the second item 600-2 into an inactivated state.

If a command controlling the first and second home appliances 200-1, 200-2 are input into the user terminal apparatus 100, the user terminal apparatus 100 may transmit the command to the first home appliance 200-1 which is the master device through the server 600 at operations S645 and S650. The first home appliance 200-1 may transmit a signal corresponding to the command to the second home appliance 200-2 which is the slave device at operation S655, and the first and second home appliances 200-1, 200-2 may be integrally controlled.

As the detailed operations in each step were described above, detailed explanation will be omitted.

FIG. 7 is a diagram for illustrating an operation of indicating that the first and second home appliances are in an interlocked state on a display according to an embodiment of the disclosure.

It is assumed that the device 1, the device 2, and the device 3 are registered in the user terminal apparatus 100, and the first item 700-1, the second item 700-2, and the third item 700-3 for controlling the device 1, the device 2, and the device 3 are displayed on the display 120, and afterwards, the device 1 and the device 2 are in an interlocked state.

According to FIG. 7A, the user terminal apparatus 100 may display the first item 700-1 for controlling the device 1 and the second item 700-2 for controlling the device 2 together in one diagram for indicating that the device 1 and the device 2 are in an interlocked state. As illustrated in FIG. 7A, the user terminal apparatus 100 may display the first item 700-1 and the second item 700-2 inside dotted lines in the form of a square. Here, it is obvious that the square and the dotted lines may be displayed while being changed into various forms.

According to FIG. 7B, in order to indicate that the device 1 and the device 2 are in an interlocked state, the user terminal apparatus 100 may arrange the first item 700-1 for controlling the device 1 and the second item 700-2 for controlling the device 2 to be relatively adjacent. As illustrated in FIG. 7B, the user terminal apparatus 100 may arrange the items such that the distance between the first item 700-1 and the second item 700-2 is more adjacent than the distance between the second item 700-2 and the third item 700-3.

According to another embodiment of the disclosure, the user terminal apparatus 100 may display the first item and the second item in the same color and thereby indicate that the items are in an interlocked state.

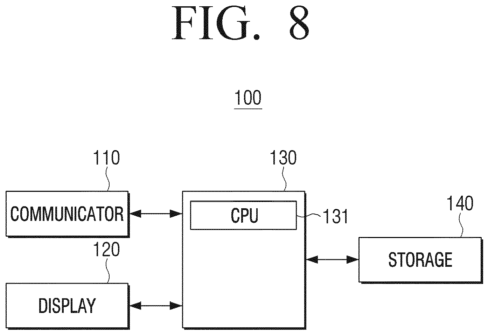

FIG. 8 is a diagram illustrating an example of a detailed configuration of the user terminal apparatus in FIG. 2.

According to FIG. 8, the user terminal apparatus 100 includes a communicator 110, a display 120, a processor 130, and a storage 140. Among the components illustrated in FIG. 8, regarding components that overlap with the components illustrated in FIG. 2, detailed explanation will be omitted.

The processor 130 may include a CPU 121, a ROM (or a non-volatile memory) storing a control program for controlling the user terminal apparatus 100, and a RAM (or a volatile memory) storing data input from the outside of the user terminal apparatus 100 or used as a storage area corresponding to various jobs performed at the user terminal apparatus 100.

When a predetermined event occurs, the processor 130 may execute the operating system (OS), programs, and various applications stored in the storage part 140. The processor 130 may include a single core, a dual core, a triple core, a quad core, and cores of multiple times thereof.

The CPU 131 accesses the storage 140, and performs booting by using the O/S stored in the storage 140. Then, the CPU 131 performs various operations by using various kinds of programs, contents, data, etc. stored in the storage 140.

The storage 140 may store various kinds of data, programs, or applications for operating/controlling the user terminal apparatus 100. The storage 140 may store control programs for controlling the user terminal apparatus 100 and the processor 130, applications initially provided from the manufacturer or downloaded from the outside, databases, or related data. For example, the storage 140 may provide a UI for setting multi-channels according to the various embodiments of the disclosure, and store programs for performing operations related to the UI.

In particular, the storage 140 may store identification information of the first and second home appliances received from the first and second home appliances or an external server. Here, the identification information may include the IP addresses, MAC addresses, product names, and product numbers of the first and second home appliances 200, and type information indicating the types of the first and second home appliances 200, etc. Also, the storage part 140 may store state information indicating the information wherein one of the first and second home appliances 200 is configured as the master device and the other is configured as the slave device from the first and second home appliances or an external server.

The storage 140 may be implemented as an internal memory such as a ROM, a RAM, etc. included in the processor 130, or implemented as a separate memory from the processor 130. In this case, the storage 140 may be implemented in the form of a memory embedded in the user terminal apparatus 100, or in the form of a memory that can be attached on or detached from the user terminal apparatus 100, according to the usage of stored data. For example, in the case of data for operating the user terminal apparatus 100, the data may be stored in a memory embedded in the user terminal apparatus 100, and in the case of data for an extended function of the user terminal apparatus 100, the data may be stored in a memory that can be attached on or detached from the user terminal apparatus 100. Meanwhile, in the case of a memory embedded in the user terminal apparatus 100, the memory may be implemented in forms such as a non-volatile memory, a volatile memory, a hard disc drive (HDD), or a solid state drive (SSD), etc.

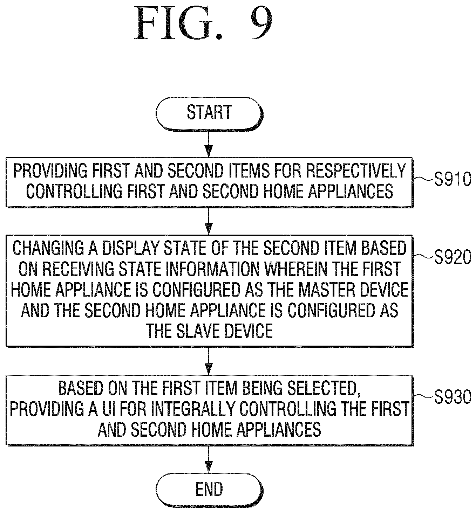

FIG. 9 is a flow chart for illustrating a control method of a user terminal apparatus according to an embodiment of the disclosure.

According to FIG. 9, the user terminal apparatus provides first and second items for respectively controlling the first and second home appliances at operation S910.

If state information wherein the first home appliance 200-1 is configured as the master device and the second home appliance 200-2 is configured as the slave device is received, the user terminal apparatus changes the display state of the second item at operation S920. Here, change of the display state may include changing the second item into an inactivated state when state information is received. State information may be received from at least one of the first and second home appliances, or received from a server.

Meanwhile, the first home appliance 200-1 may be configured as the master device based on at least one of the arrangement state of the first and second home appliances 200 or a user instruction.

If the first item is selected, the user terminal apparatus provides a UI for integrally controlling the first and second home appliances 200 at operation S930. Here, a UI for integrally controlling the first and second home appliances 200 includes a menu for controlling the first home appliance 200-1. When a menu is selected, the user terminal apparatus transmits a control command making a control operation corresponding to the menu performed at both of the first and second home appliances 200 to the first home appliance 200-1.

If the first and second home appliances 200 are home appliances of different types, and a function corresponding to a menu is a common function of the first and second home appliances 200, the user terminal apparatus may transmit a first control code and a second control code respectively corresponding to the types of the first and second home appliances 200 to the first home appliance 200-1.

If the first and second home appliances 200 are home appliances of different types, and a function corresponding to a menu is not a function provided at the second home appliance 200-2, the user terminal apparatus may transmit a control code controlling to make the second home appliance 200-2 provide a function related to the function corresponding to the menu to the first home appliance 200-1.

If the second item is selected, the user terminal apparatus may provide information notifying that the second home appliance 200-2 is integrally controlled on a UI for controlling the master device.

When state information is received, the user terminal apparatus may provide information indicating whether the first and second home appliances 200 are the master device or the slave device based on the state information.

As the detailed operations in each step were described above, detailed explanation will be omitted.

Meanwhile, at least some of the methods according to the aforementioned various embodiments of the disclosure may be implemented in the form of an application that can be installed on conventional electronic apparatuses.

Also, at least some of the methods according to the aforementioned various embodiments of the disclosure may be implemented just by software upgrade, or hardware upgrade of conventional electronic apparatuses.

In addition, at least some of the aforementioned various embodiments of the disclosure may be performed through an embedded server provided on an electronic apparatus, or an external server of an electronic apparatus.

Meanwhile, the aforementioned various embodiments of the disclosure may be implemented in a recording medium that is readable by a computer or a device similar thereto, by using software, hardware or a combination thereof. In some cases, the embodiments described in this specification may be implemented as a processor itself. According to implementation by software, the embodiments such as procedures and functions described in this specification may be implemented as separate software modules. Each of the software modules may perform one or more functions and operations described in this specification.

Meanwhile, computer instructions for executing the processing operations according to the various embodiments of the disclosure described above may be stored in a non-transitory computer readable medium. Such computer instructions stored in a non-transitory computer readable medium may make the processing operations according to the various embodiments described above performed by a specific machine, when they are executed by a processor.

A non-transitory computer-readable medium refers to a medium that stores data semi-permanently, and is readable by machines, but not a medium that stores data for a short moment such as a register, a cache, and a memory. As specific examples of a non-transitory computer-readable medium, there may be a CD, a DVD, a hard disc, a blue-ray disc, a USB, a memory card, a ROM and the like.

While preferred embodiments of the disclosure have been shown and described, the disclosure is not limited to the aforementioned specific embodiments, and it is apparent that various modifications can be made by those having ordinary skill in the art to which the disclosure belongs, as long as the resulting subject-matter falls within the scope of protection defined by the appended claims. Also, it is intended that such modifications are not to be interpreted independently from the technical idea or prospect of the disclosure.

## Claims

1. A user terminal apparatus (100) in which a first home appliance (200-1) and a second home appliance (200-2) are registered comprising:
a communicator (110);
a display (120); and
and a processor (130) configured to:
provide a first item for controlling the first home appliance (200-1) and a second item for controlling the second home appliance (200-2) on the display (120), and change a display state of the second item based on state information in which the first home appliance (200-1) is configured as a master device and the second home appliance (200-2) is configured as a slave device being received through the communicator (110),
provide a UI for integrally controlling a common function or a related function of the first home appliance (200-1) and the second home appliance (200-2) on the display (120) based on the first item corresponding to the master device being selected,
wherein the UI for integrally controlling the common function or the related function of the first and second home appliances (200) includes a menu for controlling the first home appliance (200-1), and
wherein the processor (130) is further configured to, based on the menu being selected, transmit a control command for making a control operation corresponding to the menu be performed at both of the first and second home appliances (200) to the first home appliance (200-1),
wherein the second home appliance (200-2) is a home appliance that performs a function common to or related to the function of the first home appliance (200-1).

2. The user terminal apparatus (100) of claim 1,
wherein the processor (130) is configured to:
based on receiving the state information, change the second item into an inactivated state.

3. The user terminal apparatus (100) of claim 1,
wherein the processor (130) is configured to:
based on the first and second home appliances (200) being home appliances of different types, and a function corresponding to the menu being a common function of the first and second home appliances (200), transmit a first control code and a second control code respectively corresponding to the types of the first and second home appliances (200) to the first home appliance (200-1).

4. The user terminal apparatus (100) of claim 1,
wherein the processor (130) is configured to:
based on the first and second home appliances (200) being home appliances of different types, and a function corresponding to the menu not being a function provided at the second home appliance, transmit a control code for controlling such that the second home appliance (200-2) provides a function related to the function corresponding to the menu to the first home appliance (200-1).

5. The user terminal apparatus (100) of claim 1,
wherein the state information is received from at least one of the first or second home appliances, or received from an external server.

6. The user terminal apparatus (100) of claim 1,
wherein the first home appliance (200-1) is configured as a master device based on at least one of an arrangement state of the first and second home appliances (200) or a user instruction.

7. The user terminal apparatus (100) of claim 1,
wherein the processor (130) is configured to:
based on the second item being selected, provide information notifying that the second home appliance (200-2) is integrally controlled on a UI for controlling the master device.

8. The user terminal apparatus (100) of claim 1,
wherein the processor (130) is configured to:
based on receiving the state information, provide information indicating whether the first and second home appliances (200) are a master device or a slave device through the display (120).

9. A system comprising a first home appliance (200-1) and a second home appliance (200-2) and a user terminal apparatus (100) including a display (120) and configured to integrally control the home appliances, wherein:
the first home appliance (200-1) and the second home appliance (200-2) are configured to transmit state information in which the first home appliance (200-1) is configured as a master device and the second home appliance (200-2) is configured as a slave device to the user terminal apparatus (100); and
the user terminal apparatus (100) is configured to:
provide a first item for controlling the first home appliance (200-1) and a second item for controlling the second home appliance (200-2) on the display (120), and change a display state of the second item based on receiving the state information, and
provide a UI for integrally controlling a common function or a related function of the first home appliance (200-1) and the second home appliance (200-2) based on the first item corresponding to the master device being selected,
wherein the UI for integrally controlling a common function or a related function of the first and second home appliances (200) includes a menu for controlling the first home appliance (200-1), and
wherein the user terminal is further configured to, based on the menu being selected, transmit a control command for making a control operation corresponding to the menu be performed at both of the first and second home appliances (200) to the first home appliance (200-1),
wherein the second home appliance (200-2) is a home appliance that performs a function common to or related to the function of the first home appliance (200-1).

10. A control method of a user terminal apparatus (100) in which a first home appliance (200-1) and a second home appliance (200-2) are registered, the method comprising:
provide a first item for controlling the first home appliance (200-1) and a second item for controlling the second home appliance (200-2) on a display (120 of the user terminal apparatus (100);
changing a display state of the second item based on state information in which the first home appliance (200-1) is configured as a master device and the second home appliance (200-2) is configured as a slave device being received; and
providing a UI for integrally controlling a common function or a related function of the first home appliance (200-1) and the second home appliance (200-2) based on the first item corresponding to the master device being selected,
wherein the UI for integrally controlling a common function or a related function of the first and second home appliances (200) includes a menu for controlling the first home appliance (200-1), and
the control method further comprising:
based on the menu being selected, transmitting a control command for making a control operation corresponding to the menu be performed at both of the first and second home appliances (200) to the first home appliance (200-1),
wherein the second home appliance (200-2) is a home appliance that performs a function common to or related to the function of the first home appliance (200-1).

11. The control method of claim 10,
wherein the changing a display state comprises:
based on receiving the state information, changing the second item into an inactivated state.

12. The control method of claim 10,
wherein the transmitting comprises:
based on the first and second home appliances (200) being home appliances of different types, and a function corresponding to the menu being a common function of the first and second home appliances (200), transmitting a first control code and a second control code respectively corresponding to the types of the first and second home appliances (200) to the first home appliance (200-1).

13. The control method of claim 10,
wherein the transmitting comprises:
based on the first and second home appliances (200) being home appliances of different types, and a function corresponding to the menu not being a function provided at the second home appliance, transmitting a control code for controlling such that the second home appliance (200-2) provides a function related to the function corresponding to the menu to the first home appliance (200-1).

## Patentansprüche

1. Benutzerendgeräteeinrichtung (100), in der ein erstes Haushaltsgerät (200-1) und ein zweites Haushaltsgerät (200-2) registriert sind, umfassend:
einen Kommunikator (110);
eine Anzeige (120); und
und einen Prozessor (130), der für Folgendes konfiguriert ist:
Bereitstellen eines ersten Elements zum Steuern des ersten Haushaltsgeräts (200-1) und eines zweiten Elements zum Steuern des zweiten Haushaltsgeräts (200-2) auf der Anzeige (120) und Ändern eines Anzeigezustands des zweiten Elements basierend darauf, dass Zustandsinformationen, in denen das erste Haushaltsgerät (200-1) als eine Master-Vorrichtung konfiguriert ist und das zweite Haushaltsgerät (200-2) als eine Slave-Vorrichtung konfiguriert ist, durch den Kommunikator (110) empfangen werden,
Bereitstellen einer UI zum integralen Steuern einer gemeinsamen Funktion oder einer verwandten Funktion des ersten Haushaltsgeräts (200-1) und des zweiten Haushaltsgeräts (200-2) auf der Anzeige (120) basierend darauf, dass das erste Element, das der Master-Vorrichtung entspricht, ausgewählt ist,
wobei die UI zum integralen Steuern der gemeinsamen Funktion oder der verwandten Funktion des ersten und des zweiten Haushaltsgeräts (200) ein Menü zum Steuern des ersten Haushaltsgeräts (200-1) beinhaltet, und
wobei der Prozessor (130) ferner konfiguriert ist, um basierend darauf, dass das Menü ausgewählt ist, einen Steuerbefehl, um zu bewirken, dass eine Steueroperation, die dem Menü entspricht, sowohl an dem ersten als auch an dem zweiten Haushaltsgerät (200) durchgeführt wird, an das erste Haushaltsgerät (200-1) zu übertragen,
wobei das zweite Haushaltsgerät (200-2) ein Haushaltsgerät ist, das eine Funktion durchführt, die mit der Funktion des ersten Haushaltsgeräts (200-1) gemeinsam oder verwandt ist.

2. Benutzerendgeräteeinrichtung (100) nach Anspruch 1,
wobei der Prozessor (130) für Folgendes konfiguriert ist:
basierend auf dem Empfangen der Zustandsinformationen, Ändern des zweiten Elements in einen inaktivierten Zustand.

3. Benutzerendgeräteeinrichtung (100) nach Anspruch 1,
wobei der Prozessor (130) für Folgendes konfiguriert ist:
basierend darauf, dass das erste und das zweite Haushaltsgerät (200) Haushaltsgeräte unterschiedlichen Typs sind und eine Funktion, die dem Menü entspricht, eine gemeinsame Funktion des ersten und des zweiten Haushaltsgeräts (200) ist, Übertragen eines ersten Steuercodes und eines zweiten Steuercodes jeweils entsprechend den Typen des ersten und des zweiten Haushaltsgeräts (200) an das erste Haushaltsgerät (200-1).

4. Benutzerendgeräteeinrichtung (100) nach Anspruch 1,
wobei der Prozessor (130) für Folgendes konfiguriert ist:
basierend darauf, dass das erste und das zweite Haushaltsgerät (200) Haushaltsgeräte unterschiedlichen Typs sind und eine Funktion, die dem Menü entspricht, keine Funktion ist, die an dem zweiten Haushaltsgerät bereitgestellt ist, Übertragen eines Steuercodes zum Steuern, sodass das zweite Haushaltsgerät (200-2) eine Funktion bereitstellt, die sich auf die Funktion bezieht, die dem Menü entspricht, an das erste Haushaltsgerät (200-1).

5. Benutzerendgeräteeinrichtung (100) nach Anspruch 1,
wobei die Zustandsinformationen von zumindest einem von dem ersten oder dem zweiten Haushaltsgerät empfangen werden oder von einem externen Server empfangen werden.

6. Benutzerendgeräteeinrichtung (100) nach Anspruch 1,
wobei das erste Haushaltsgerät (200-1) basierend auf zumindest einem von einem Anordnungszustand des ersten und des zweiten Haushaltsgeräts (200) oder einer Benutzeranweisung als eine Master-Vorrichtung konfiguriert ist.

7. Benutzerendgeräteeinrichtung (100) nach Anspruch 1,
wobei der Prozessor (130) für Folgendes konfiguriert ist:
basierend darauf, dass das zweite Element ausgewählt ist, Bereitstellen von Informationen, die benachrichtigen, dass das zweite Haushaltsgerät (200-2) auf einer UI zum Steuern der Master-Vorrichtung integral gesteuert wird.

8. Benutzerendgeräteeinrichtung (100) nach Anspruch 1,
wobei der Prozessor (130) für Folgendes konfiguriert ist:
basierend auf dem Empfangen der Zustandsinformationen, Bereitstellen von Informationen, die angeben, ob das erste und das zweite Haushaltsgerät (200) eine Master-Vorrichtung oder eine Slave-Vorrichtung sind, durch die Anzeige (120).

9. System, das ein erstes Haushaltsgerät (200-1) und ein zweites Haushaltsgerät (200-2) und eine Benutzerendgeräteeinrichtung (100) umfasst, die eine Anzeige (120) beinhaltet und konfiguriert ist, um die Haushaltsgeräte integral zu steuern, wobei:
das erste Haushaltsgerät (200-1) und das zweite Haushaltsgerät (200-2) konfiguriert sind, um Zustandsinformationen, in denen das erste Haushaltsgerät (200-1) als eine Master-Vorrichtung konfiguriert ist und das zweite Haushaltsgerät (200-2) als eine Slave-Vorrichtung konfiguriert ist, an die Benutzerendgeräteeinrichtung (100) zu übertragen; und
die Benutzerendgeräteeinrichtung (100) für Folgendes konfiguriert ist:
Bereitstellen eines ersten Elements zum Steuern des ersten Haushaltsgeräts (200-1) und eines zweiten Elements zum Steuern des zweiten Haushaltsgeräts (200-2) auf der Anzeige (120) und Ändern eines Anzeigezustands des zweiten Elements basierend auf dem Empfangen der Zustandsinformationen, und
Bereitstellen einer UI zum integralen Steuern einer gemeinsamen Funktion oder einer verwandten Funktion des ersten Haushaltsgeräts (200-1) und des zweiten Haushaltsgeräts (200-2) basierend darauf, dass das erste Element, das der Master-Vorrichtung entspricht, ausgewählt ist,
wobei die UI zum integralen Steuern einer gemeinsamen Funktion oder einer verwandten Funktion des ersten und des zweiten Haushaltsgeräts (200) ein Menü zum Steuern des ersten Haushaltsgeräts (200-1) beinhaltet, und
wobei das Benutzerendgerät ferner konfiguriert ist, um basierend darauf, dass das Menü ausgewählt ist, einen Steuerbefehl, um zu bewirken, dass eine Steueroperation, die dem Menü entspricht, sowohl an dem ersten als auch dem zweiten Haushaltsgerät (200) durchgeführt wird, an das erste Haushaltsgerät (200-1) zu übertragen,
wobei das zweite Haushaltsgerät (200-2) ein Haushaltsgerät ist, das eine Funktion durchführt, die mit der Funktion des ersten Haushaltsgeräts (200-1) gemeinsam oder verwandt ist.

10. Steuerverfahren einer Benutzerendgeräteeinrichtung (100), in der ein erstes Haushaltsgerät (200-1) und ein zweites Haushaltsgerät (200-2) registriert sind, wobei das Verfahren Folgendes umfasst:
Bereitstellen eines ersten Elements zum Steuern des ersten Haushaltsgeräts (200-1) und eines zweiten Elements zum Steuern des zweiten Haushaltsgeräts (200-2) auf einer Anzeige (120 der Benutzerendgeräteeinrichtung (100);
Ändern eines Anzeigezustands des zweiten Elements basierend darauf, dass Zustandsinformationen, in denen das erste Haushaltsgerät (200-1) als eine Master-Vorrichtung konfiguriert ist und das zweite Haushaltsgerät (200-2) als eine Slave-Vorrichtung konfiguriert ist, empfangen werden; und
Bereitstellen einer UI zum integralen Steuern einer gemeinsamen Funktion oder einer verwandten Funktion des ersten Haushaltsgeräts (200-1) und des zweiten Haushaltsgeräts (200-2) basierend darauf, dass das erste Element, das der Master-Vorrichtung entspricht, ausgewählt ist,
wobei die UI zum integralen Steuern einer gemeinsamen Funktion oder einer verwandten Funktion des ersten und des zweiten Haushaltsgeräts (200) ein Menü zum Steuern des ersten Haushaltsgeräts (200-1) beinhaltet, und
wobei das Steuerverfahren ferner Folgendes umfasst:
basierend darauf, dass das Menü ausgewählt ist, Übertragen eines Steuerbefehls, um zu bewirken, dass eine Steueroperation, die dem Menü entspricht, sowohl an dem ersten als auch dem zweiten Haushaltsgerät (200) durchgeführt wird, an das erste Haushaltsgerät (200-1),
wobei das zweite Haushaltsgerät (200-2) ein Haushaltsgerät ist, das eine Funktion durchführt, die mit der Funktion des ersten Haushaltsgeräts (200-1) gemeinsam oder verwandt ist.

11. Steuerverfahren nach Anspruch 10,
wobei das Ändern eines Anzeigezustands Folgendes umfasst:
basierend auf dem Empfangen der Zustandsinformationen, Ändern des zweiten Elements in einen inaktivierten Zustand.

12. Steuerverfahren nach Anspruch 10,
wobei das Übertragen Folgendes umfasst:
basierend darauf, dass das erste und das zweite Haushaltsgerät (200) Haushaltsgeräte unterschiedlichen Typs sind und eine Funktion, die dem Menü entspricht, eine gemeinsame Funktion des ersten und des zweiten Haushaltsgeräts (200) ist, Übertragen eines ersten Steuercodes und eines zweiten Steuercodes jeweils entsprechend den Typen des ersten und des zweiten Haushaltsgeräts (200) an das erste Haushaltsgerät (200-1).

13. Steuerverfahren nach Anspruch 10,
wobei das Übertragen Folgendes umfasst:
basierend darauf, dass das erste und das zweite Haushaltsgerät (200) Haushaltsgeräte unterschiedlichen Typs sind und eine Funktion, die dem Menü entspricht, keine Funktion ist, die an dem zweiten Haushaltsgerät bereitgestellt ist, Übertragen eines Steuercodes zum Steuern, sodass das zweite Haushaltsgerät (200-2) eine Funktion bereitstellt, die sich auf die Funktion bezieht, die dem Menü entspricht, an das erste Haushaltsgerät (200-1).

## Revendications

1. Appareil de terminal d'utilisateur (100) dans lequel un premier appareil domestique (200-1) et un second appareil domestique (200-2) sont enregistrés comprenant :
un dispositif de communication (110) ; et
un dispositif d'affichage (120) ; et
et un processeur (130) configuré pour :
fournir un premier élément pour commander le premier appareil domestique (200-1) et un second élément pour commander le second appareil domestique (200-2) sur le dispositif d'affichage (120), et modifier un état d'affichage du second élément sur la base d'informations d'état dans lequel le premier appareil domestique (200-1) est configuré en tant que dispositif maître et le second appareil domestique (200-2) est configuré en tant que dispositif esclave reçu par l'intermédiaire du dispositif de communication (110),
fournir une UI pour commander intégralement une fonction commune ou une fonction connexe du premier appareil domestique (200-1) et du second appareil domestique (200-2) sur le dispositif d'affichage (120) sur la base du premier élément correspondant au dispositif maître choisi,
ladite UI pour commander intégralement la fonction commune ou la fonction connexe des premier et second appareils domestiques (200) comprenant un menu pour commander le premier appareil domestique (200-1), et
ledit processeur (130) étant en outre configuré pour, sur la base du menu choisi, transmettre une instruction de commande pour amener une opération de commande correspondant au menu à être effectuée à la fois au niveau des premier et second appareils domestiques (200), au premier appareil domestique (200-1),
ledit second appareil domestique (200-2) étant un appareil domestique qui effectue une fonction commune ou liée à la fonction du premier appareil domestique (200-1).

2. Appareil de terminal d'utilisateur (100) selon la revendication 1,
ledit processeur (130) étant configuré pour :
sur la base de la réception des informations d'état, faire passer le second élément dans un état inactivé.

3. Appareil de terminal d'utilisateur (100) selon la revendication 1,
ledit processeur (130) étant configuré pour :
sur la base que les premier et second appareils domestiques (200) sont des appareils domestiques de types différents, et qu'une fonction correspondant au menu est une fonction commune des premier et second appareils domestiques (200), transmettre au premier appareil domestique (200-1) un premier code de commande et un second code de commande correspondant respectivement aux types des premier et second appareils domestiques (200).

4. Appareil de terminal d'utilisateur (100) selon la revendication 1,
ledit processeur (130) étant configuré pour :
sur la base que les premier et second appareils domestiques (200) sont des appareils domestiques de types différents, et qu'une fonction correspondant au menu n'est pas une fonction fournie au niveau du second appareil domestique, transmettre au premier appareil domestique (200-1) un code de commande pour commander de sorte que le second appareil domestique (200-2) fournisse une fonction liée à la fonction correspondant au menu.

5. Appareil de terminal d'utilisateur (100) selon la revendication 1,
lesdites informations d'état étant reçues en provenance d'au moins l'un des premier ou second appareils domestiques, ou reçues en provenance d'un serveur externe.

6. Appareil de terminal d'utilisateur (100) selon la revendication 1,
ledit premier appareil domestique (200-1) étant configuré en tant que dispositif maître sur la base d'au moins l'un d'un état d'agencement des premier et second appareils domestiques (200) ou d'une instruction d'utilisateur.

7. Appareil de terminal d'utilisateur (100) selon la revendication 1,
ledit processeur (130) étant configuré pour :
sur la base du second élément sélectionné, fournir des informations notifiant que le second appareil domestique (200-2) est intégralement commandé sur une UI pour commander le dispositif maître.

8. Appareil de terminal d'utilisateur (100) selon la revendication 1,
ledit processeur (130) étant configuré pour :
sur la base de la réception des informations d'état, fournir des informations indiquant si les premier et second appareils domestiques (200) sont un dispositif maître ou un dispositif esclave par l'intermédiaire du dispositif d'affichage (120).

9. Système comprenant un premier appareil domestique (200-1) et un second appareil domestique (200-2) et un appareil de terminal d'utilisateur (100) comprenant un dispositif d'affichage (120) et configuré pour commander intégralement les appareils domestiques :
ledit premier appareil domestique (200-1) et ledit second appareil domestique (200-2) étant configurés pour transmettre à l'appareil de terminal d'utilisateur (100) des informations d'état dans lesquelles le premier appareil domestique (200-1) est configuré en tant que dispositif maître et le second appareil domestique (200-2) est configuré en tant que dispositif esclave ; et
ledit appareil de terminal d'utilisateur (100) étant configuré pour :
fournir un premier élément pour commander le premier appareil domestique (200-1) et un second élément pour commander le second appareil domestique (200-2) sur le dispositif d'affichage (120), et modifier un état d'affichage du second élément sur la base de la réception des informations d'état, et
fournir une UI pour commander intégralement une fonction commune ou une fonction connexe du premier appareil domestique (200-1) et du second appareil domestique (200-2) sur la base du premier élément correspondant au dispositif maître sélectionné,
ladite UI pour commander intégralement une fonction commune ou une fonction connexe des premier et second appareils domestiques (200) comprenant un menu pour commander le premier appareil domestique (200-1), et
ledit terminal d'utilisateur étant en outre configuré pour, sur la base du menu sélectionné, transmettre, au premier appareil domestique (200-1), une instruction de commande pour amener une opération de commande correspondant au menu à être effectuée à la fois sur les premier et second appareils domestiques (200),
ledit second appareil domestique (200-2) étant un appareil domestique qui effectue une fonction commune ou liée à la fonction du premier appareil domestique (200-1).

10. Procédé de commande d'un appareil de terminal d'utilisateur (100) dans lequel un premier appareil domestique (200-1) et un second appareil domestique (200-2) sont enregistrés, le procédé comprenant :
la fourniture d'un premier élément pour commander le premier appareil domestique (200-1) et d'un second élément pour commander le second appareil domestique (200-2) sur un dispositif d'affichage (120 de l'appareil de terminal d'utilisateur (100) ;
la modification d'un état d'affichage du second élément sur la base d'informations d'état reçues dans lesquelles le premier appareil domestique (200-1) est configuré en tant que dispositif maître et le second appareil domestique (200-2) est configuré en tant que dispositif esclave ; et
la fourniture d'une UI pour commander intégralement une fonction commune ou une fonction connexe du premier appareil domestique (200-1) et du second appareil domestique (200-2) sur la base du premier élément correspondant au dispositif maître sélectionné,
ladite UI pour commander intégralement une fonction commune ou une fonction connexe des premier et second appareils domestiques (200) comprenant un menu pour commander le premier appareil domestique (200-1), et
ledit procédé de commande comprenant en outre :
sur la base du menu sélectionné, la transmission, au premier appareil domestique (200-1), d'une instruction de commande pour amener une opération de commande correspondant au menu à être effectuée à la fois sur les premier et second appareils domestiques (200),
ledit second appareil domestique (200-2) étant un appareil domestique qui effectue une fonction commune ou liée à la fonction du premier appareil domestique (200-1).

11. Procédé de commande selon la revendication 10,
ladite modification d'un état d'affichage comprenant :
sur la base de la réception des informations d'état, le passage du second élément dans un état inactivé.

12. Procédé de commande selon la revendication 10,
ladite transmission comprenant :
sur la base que les premier et second appareils domestiques (200) sont des appareils domestiques de types différents, et qu'une fonction correspondant au menu est une fonction commune des premier et second appareils domestiques (200), la transmission, au premier appareil domestique (200-1), d'un premier code de commande et d'un second code de commande correspondant respectivement aux types des premier et second appareils domestiques (200).

13. Procédé de commande selon la revendication 10,
ladite transmission comprenant :
sur la base que les premier et second appareils domestiques (200) sont des appareils domestiques de types différents, et qu'une fonction correspondant au menu n'est pas une fonction fournie au niveau du second appareil domestique, la transmission, au premier appareil domestique (200-1), d'un code de commande pour commander de sorte que le second appareil domestique (200-2) fournisse une fonction liée à la fonction correspondant au menu.
